# EUROPÄISCHE PATENTSCHRIFT

(11) **EP 1 243 314 B1**
(45) Veröffentlichungstag und Bekanntmachung des Hinweises auf die Patenterteilung: **26.01.2005**
(21) Anmeldenummer: 02012479.8
(22) Anmeldetag: 28.03.1996
(51) Int. Cl.: B01F 13/00, B01F 5/06

(54) **Verfahren und Vorrichtung zum Mischen kleinster Flüssigkeitsmengen**
Method and apparatus for mixing minute amounts of liquid
Procédé et appareil pour mélanger des quantités infimes de liquide

(30) Priorität: 30.03.1995 DE 9511603 U
(43) Veröffentlichungstag der Anmeldung: 25.09.2002
(62) Teilanmeldung aus: 96911955.1
(73) Patentinhaber: MERCK PATENT GmbH, 64293 Darmstadt (DE)
(72) Erfinder: Schwesinger, Norbert, Prof. Dr., 85386 Eching (DE); Frank, Thomas, 98693 Ilmenau (DE)

(56) Entgegenhaltungen:
- EP-A- 0 495 169
- US-A- 3 963 221
- US-A- 4 971 450
- MENSINGER ET AL: "Microreactor with integrated static mixer and analysis system" PROCEEDINGS MICRO TOTAL ANALYSIS SYSTEMS, 1994 WORKSHOP, 1994, Seiten 237-243, XP008008041 University of Twente, The Netherlands

## Beschreibung

Die Erfindung betrifft ein Verfahren zum Mischen von Flüssigkeitsströme, die in Mikrokanälen fließen, wobei in mehreren aufeinanderfolgenden Mischschritten jeweils ein Flüssigkeitsstrom längs mindestens einer sich in Strömungsrichtung erstreckenden Trennebene in mindestens zwei Teilströme aufgeteilt wird und die Teilströme längs mindestens einer sich in Strömungsrichtung erstreckenden Zusammenflussebene zu einem dem nächsten Mischschritt zugeführten Flüssigkeitsstrom zusammengefügt werden.

Bekannte Verfahren zum Mischen von Flüssigkeitsströmen basieren oft auf einem nach Möbius benannten Mischprinzip (Mensinger et al, "Microreactor with integrated static mixer and analysis system", Proceedings Mikro Total Analysis Systems, 1994, Seiten 237-243, ISBN 0-7923-3217-2). Ein Flüssigkeitsstrom wird dabei in zwei Teilströme aufgeteilt, von denen ein Teilstrom relativ zu dem zweiten Teilstrom vor dem Zusammenführen verdreht wird. Dieser Mischschritt kann mehrfach hintereinander wiederholt werden und erzeugt jeweils neue Grenzflächen innerhalb des zusammengeführten Flüssigkeitsstroms. Eine kontrollierte Rotation eines Teilstroms um seine Strömungsrichtung ist bei kleinsten Flüssigkeitsströmen nicht durchführbar, weshalb dieses Verfahren nicht zum Mischen kleinster Flüssigkeitsmengen verwendet werden kann.

Es ist auch ein Verfahren zum Mischen größerer Mengen körniger Materialien bekannt (FR-A-2 262 552), bei welchem zuvor getrennte Teilströme seitlich versetzt wieder zusammengeführt werden. Dieses Verfahren ist jedoch nur für größere Teilströme bestimmt und geeignet, aber nicht im Mikrobereich umsetzbar.

Aufgabe der Erfindung ist es demzufolge, ein Verfahren zum Mischen so zu gestalten, dass auch kleinste Flüssigkeitsmengen effizient gemischt werden.

Diese Aufgabe wird erfindungsgemäß dadurch gelöst, dass in den aufeinanderfolgenden Mischschritten jeweils die Zusammenflussebene gegenüber der vorangehenden Trennebene um 90° gedreht ist, dass die Flüssigkeitsströme innerhalb eines Mischschritts in Mikrokanälen geführt werden, die sich auf mindestens zwei Ebenen befinden und dass die aufgeteilten Teilströme beim Zusammenfügen durch Verbindungselemente geführt werden, die mindestens zwei Ebenen verbinden.

Das Verfahren ist an die Herstellungs- und Bearbeitungsmöglichkeiten der Mikrotechnik und Mikrostrukturierung angepasst und erlaubt eine einfache und kostengünstige Umsetzung. Insbesondere die verfahrensgemäße Führung der Teilströme in mehreren Ebenen erlaubt eine direkte Umsetzung durch mikrostrukturierbare Materialien.

Die Anordnung der Trennebenen und Zusammenflussebenen in einem einzelnen Mischschritt sowie bei mehreren Mischschritten hintereinander führt schon nach wenigen Mischschritten zu einer effizienten Durchmischung auch kleinster Flüssigkeitsmengen.

Die Erfindung betrifft auch eine Vorrichtung zum Mischen von Flüssigkeitsmengen mit Mikrokanälen, bestehend aus mindestens einem Mischelement mit mindestens einem Einlasskanal und mit mindestens einem Auslasskanal, wobei sich in jedem Mischelement der Einlasskanal längs mindestens einer sich in Strömungsrichtung erstreckenden Trennebene in mindestens zwei Zweigkanäle verzweigt, die längs mindestens einer sich in Strömungsrichtung erstreckenden Zusammenflussebene zu dem Auslasskanal zusammengeführt sind.

Vorrichtungen zum Mischen von Flüssigkeiten sind im Stand der Technik in Form von statischen und dynamischen Mischern bekannt.

Statische Mischer bestehen meist aus Rohrsystemen mit festen Einbauten. Durch die Nutzung der kinetischen Energie einer strömenden Flüssigkeit, wird diese nach einem bestimmten Fließweg homogenisiert.

Dynamische Mischer besitzen rotierende Mischwerkzeuge. Diese bringen die Mischenergie in das Mischgut und bewirken die Homogenisierung. Wegen der Größe der Ausrüstungen sind derartige Mischer nur für große Flüssigkeitsmengen einsetzbar. Die entstehenden End- oder Zwischenprodukte werden häufig jedoch nicht in dieser Menge benötigt.

Durch extreme Verkleinerung der Reaktionsumgebung wurde versucht Anordnungen zu schaffen, die ein Mischen bei geringem Materialeinsatz ermöglichen. Solche Mischer arbeiten als statische Mischer zum homogenen Vermischen kleiner Flüssigkeitsmengen nach dem Prinzip der Diffusion von Flüssigkeitsteilchen. In (Branebjerg et al, "Application of miniature analyzers: From microfluidic components to µTAS", Proceedings Mikro Total Analysis Systems, 1994, Seiten 141-151, ISBN 0-7923-3217-2) ist eine Vorrichtung beschrieben, bei der die Flüssigkeiten durch enge Kanäle fließen und sich nach entsprechend langen Strömungswegen durch Diffusion vermischen. Als nachteilig erweisen sich bei diesen Anordnungen der hohe Druckverlust und der geringe Wirkungsgrad.

Eine weitere Bauart statischer Mischer ist in (Proceedings Mikro Total Analysis Systems, 1994, Seite 79, ISBN 0-7923-3217-2) beschrieben. Diese Anordnung weist eine Vielzahl von Düsen auf, durch welche die zu vermischenden Flüssigkeiten ineinander gepresst werden. Auch bei diesen Ausführungen sind der hohe Druckverlust und der geringe Wirkungsgrad nachteilig.

Es sind ferner Mischer bekannt, die eine komplizierte Form der Kanäle aufweisen und bei denen durch Einbauten eine Drehung und damit eine Vermischung der Flüssigkeit bewirkt werden soll, wobei nachteiliger Weise nach jedem Mischelement eine Aufteilung der Flüssigkeit erfolgt und nach dem Folgeelement die Aufteilung wieder zu einer mechanischen Entmischung der Flüssigkeit führt (Mensinger et al, "Microreactor with integrated static mixer and analysis system", Proceedings Mikro Total Analysis Systems, 1994, Seiten 237-243, ISBN 0-7923-3217-2). Die bekannten Mischer für kleine Flüssigkeitsmengen sind entweder sehr kompliziert aufgebaut oder sie haben einen sehr geringen Wirkungsgrad. Zu diesen Mischern zählt auch die in dieser Literaturstelle ebenfalls beschriebene Ausführung eines Möbius-Mischers. Das Mischprinzip dieses Mischers besteht in der Auftrennung des Flüssigkeitsstroms an einer gedachten Trennungslinie, einer Verdrehung beider erhaltenen Teilströme im Uhrzeigersinn oder entgegengesetzt zum Uhrzeigersinn um 90° und einer erneuten Aneinanderschichtung der Teilströme zu einem Flüssigkeitsstrom. Beliebig viele Elemente eines solchen Möbius-Mischers können hintereinandergeschaltet sein.

Nachteilig ist bei diesem Mischer, dass zu seiner Herstellung in die Oberfläche von geeigneten Substraten aufwendig gewundene Kanalstrukturen eingebracht werden müssen, die das Verdrehen des Flüssigkeitsstroms in einem Mischvorgang um je 90° ermöglichen sollen. Derartige Kanalstrukturen sind im Mikrobereich nur mit enorm hohen Aufwand herstellbar. Insbesondere durch Versuche hat sich eine nicht optimale Durchmischung von Flüssigkeiten gezeigt. Dies ist darauf zurückzuführen, dass im Mikrobereich kleinste Flüssigkeitsmengen nicht den im Makrobereich bekannten Strömungsgesetzen folgen und sich deshalb die getrennten Flüssigkeitsströme nicht entsprechend dem Verlauf der Kanalgeometrie drehen und so die theoretische Aneinanderschichtung der Flüssigkeitsschichten in veränderter Reihenfolge nicht erfolgt.

Eine besondere Ausführungsform eines statischen Mischers, welcher für das Vermischen viskoser polymerer Substanzmischungen oder Lösungen geeignet ist, ist in EP 0 495 169 A1 beschrieben. Dieser Mischer weist relativ dünne, direkt übereinander angeordnete Platten auf, welche Öffnungen und Kanäle aufweisen, um den Flüssigkeitsstrom aufzuspalten, in verschiedene Richtungen zu führen und anschließend in einer Ausgangsöffnung wieder zu vereinigen.

In US-A-4,971,450 erfolgt das Vermischen indem die Flüssigkeit in verschiedene Rohröffnungen geführt wird, deren Eingänge in einer Ebene nebeneinander liegen. Die Rohre werden über eine kurze Wegstrecke in der Weise geführt, dass die Ausgänge wiederum in einer Ebene nebeneinander liegen, wobei jedoch diese Ebene senkrecht auf der Eingangsebene steht. Werden nun zwei solcher Vorrichtungen hintereinander angeordnet, erfolgt an den Übergängen ein Vermischen der Flüssigkeiten in den zwischen den Elementen sich bildenden Kammern.

In der Schrift Fr-A-2 262 552 ist eine Vorrichtung zum Vermischen von granuliertem Material beschrieben. Sie besteht aus mehreren hintereinander geschalteten Elementen, wobei jedes einzelne Element aus zwei Rohren aufgebaut ist, welche über die Länge eines Elements gegeneinander verdreht werden. Durch eine daran angepasste Änderung der Querschnittsflächen wird zu beiden Seiten des Elements eine im wesentlichen quadratische Gesamtquerschnittsfläche als Summe der beiden Rohrquerschnitte vorgegeben. Die durch die gemeinsame Seitenwand der beiden Rohre vorgegebene Trennebene zu Beginn des Elements steht senkrecht auf der Verbindungsebene am Ende des Elements, so dass eine Drehung der beiden Teilströme erreicht wird. Durch die Anordnung mehrerer Mischelemente hintereinander wird eine Mischung des Materials herbeigeführt. Die Vorrichtung ist für körniges, also rieselfähiges Material bestimmt, das allein auf Grund der Schwerkraft die einzelnen Mischelemente durchfällt. Die Konstruktion dieser Mischelemente lässt keine Verkleinerung in den Mikromaßstab zu. Die Schwerkraft ist bei kleinsten Flüssigkeitsmengen nicht ausreichend, um eine effektive Durchmischung zu gewährleisten.

Durch FR-A1-2 407 019 wird eine Vorrichtung zum Vermischen von zwei Flüssigkeiten beschrieben, die es erlaubt, sehr geringe Flüssigkeitsmengen zu vermischen. Die beschriebene Vorrichtung besteht aus einer unteren ebenen Platte, in die zwei Kanäle graviert sind, welche gegeneinander laufen, sich in einem Punkt vereinigen, in Form eines Kanals weiterverlaufen, um sich nach kurzer Wegstrecke wieder zu trennen und nach dem Durchlaufen einer buckelförmigen Schleife sich wieder zu einem Kanal zu vereinigen. Nach wiederholter Auftrennung des gemeinsamen Kanals in buckelförmigen Schleifen endet die Mischvorrichtung in einem Kanal. Die zwei zu vermischenden Flüssigkeiten werden durch Öffnungen in einer oberen, abdichtenden Platte in die zwei aufeinander zulaufenden Kanäle eingeführt und die erhaltene Flüssigkeitsmischung durch eine Öffnung in der oberen Platte, welche an das Ende des Kanals der Mischvorrichtung anschließt, abgeführt. Flüssigkeiten mit hoher Viskosität können mit dieser Vorrichtung nicht ausreichend durchmischt werden.

Der Erfindung liegt die Aufgabe zugrunde, eine Vorrichtung anzugeben, die bereits sehr kleine Flüssigkeitsmengen mit hoher Effizienz homogenisieren kann und die einfach herstellbar ist.

Diese Aufgabe wird erfindungsgemäß dadurch gelöst, dass in einem Mischelement jeweils die Zusammenflussebene gegenüber der Trennebene des selben Mischelements um 90° gedreht ist, dass innerhalb eines Mischelements mindestens auf zwei Ebenen Mikrokanäle verlaufen, dass an den Verzweigungselementen und/oder Zusammenflusselementen Verbindungen zwischen den Ebenen gebildet werden und dass von diesen Verbindungselementen neue Mikrokanäle ausgehen.

Vorteilhafte Ausgestaltungen der erfindungsgemäßen Anordnung sind in den Unteransprüchen angegeben.

Die erfindungsgemäße Vorrichtung ist zum Vermischen kleinster Flüssigkeitsmengen mit hoher Effizienz geeignet und zeichnet sich durch eine sehr kleine Baugröße aus.

Die Herstellung der Mischelemente erfolgt mit mikrostrukturierbaren Werkstoffen.

Vorzugsweise erfolgt ihre Herstellung, indem einkristallines Silizium oder strukturierbares Glas als Substratmaterial mit Hilfe von Mikrotechnologien strukturiert wird, und zwar werden in dem Silizium mit Hilfe mikrotechnischer Strukturierungsverfahren, wie chemische Ätzprozesse, Laserstrukturierungsverfahren, Fotoformprozesse, Sandstrahlen und dergleichen Mikrokanäle und Verbindungselemente hergestellt. Durch Kombination mehrerer auf diese Weise strukturierter Substrate lassen sich verschiedenste Ausführungsformen der erfindungsgemäßen Vorrichtung herstellen. Dabei kann sich zwischen den Substraten eine Zwischenlage befinden, die Verbindungen zwischen den einzelnen Ebenen aufweist. Weiterhin können solche erfindungsgemäßen Vorrichtungen Abdeckungen aus Silizium oder aus Glas besitzen.

Einzelne Mischelemente können hintereinander oder übereinander angeordnet sein. Zwei aufeinander folgende Mischelemente können um einen beliebigen Winkel, vorzugsweise um 90°, gegeneinander verdreht angeordnet sein.

Die Erfindung wird im Folgenden anhand mehrerer Ausführungsbeispiele näher erläutert. In der zugehörigen Zeichnung zeigen:
Figur 1 die Ansicht eines Mischelements bestehend aus zwei strukturierten Substratschichten,
Figur 2 die Ansicht eines Mischelementes bestehend aus zwei strukturierten Substratschichten sowie der seitlichen Anordnung der Ein- und Auslasskanäle des Mischelementes,
Figur 3 die Ansicht eines Mischelementes bestehend aus zwei strukturierten Substratschichten sowie der Anordnung der Ein- und Auslasskanäle des Mischelementes in der oberen Substratschicht,
Figur 4 die Ansicht eines Mischelementes bestehend aus drei strukturierten Substratschichten,
Figur 5 die Ansicht eines Mischelementes zum Vermischen von mehr als zwei Fluiden, bestehend aus zwei strukturierten Substratschichten und seitlich angeordneten Ein- und Auslasskanälen,
Figur 6 die Ansicht eines Mischelements zum Vermischen von mehr als zwei Fluiden, bestehend aus zwei strukturierten Substratschichten und Ein- und Auslasskanälen, die in einer oberen Substratschicht angeordnet sind,
Fig. 7 die Ansicht eines Mikromischers, bei welchem zwei Ebenen von Mikrokanälen auf einer einzigen strukturierten Substratschicht angeordnet sind,
Fig. 8 den schematischen Aufbau mehrerer auf gemeinsamen Substratschichten hintereinander angeordneter Mischelemente, deren jeweiliger Aufbau dem in Fig. 7 gezeigten Mischelement entspricht,
Fig. 9 einen Ansicht des in Fig. 8 gezeigten Mischelements in geschnittener Darstellung,
Fig. 10 die Ansicht eines Mischelements, bei welchem ein Mikrokanal zwischen einem Verzweigungselement und einem Zusammenflusselement in einem Verbindungspunkt die Ebene wechselt,
Fig. 11 eine Ansicht eines Mischelements, bei welchem ein Mikrokanal zwischen einem Verzweigungselement und einem Zusammenflusselement die Ebene wechselt und
Fig. 12 eine Ansicht des in Fig. 11 gezeigten Mischelements, bei welchem die Strömungsrichtung entgegen der in Fig. 11 gezeigten Strömungsrichtung verläuft.

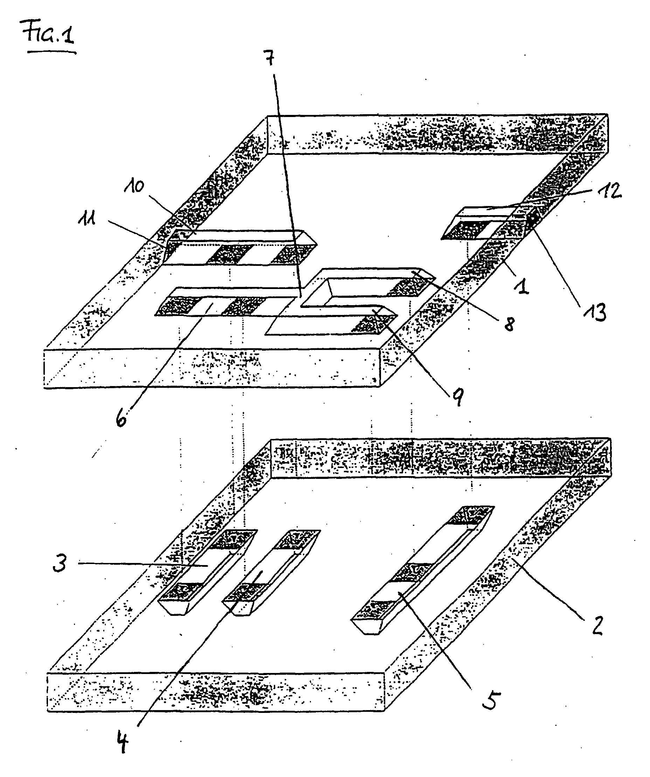

Eine konkrete Ausführungsform für ein Mischelement ist in Figur 1 gezeigt. Das Mischelement wird durch zwei als getrennte Substratscheiben ausgeführte Substratschichten 1 und 2 realisiert, die miteinander hermetisch dicht verbunden sind. In der Oberseite der Substratschicht 2, die eine horizontale Ebene darstellt, sind Mikrokanäle 3, 4 und 5 angebracht. Jeder dieser Mikrokanäle ist von den anderen Mikrokanälen 3, 4 und 5 in der Substratschicht 2 isoliert. In der Unterseite der Substratschicht 1, die ebenfalls eine horizontale Ebene darstellt, ist eine weitere Mikrokanalstruktur eingebracht, die verschiedene Abschnitte aufweist.

An einen gerade verlaufenden Abschnitt eines Mikrokanals 6 in der Substratschicht 1 schließt sich ein Verzweigungselement 7 an, dessen Trennebene sich vertikal in Strömungsrichtung erstreckt. Von diesem Verzweigungselement 7 gehen zwei parallel verlaufende Zweigkanäle 8 und 9 aus, die jeweils in den als Verbindungskanal ausgeführten Mikrokanal 5 der Substratschicht 2 münden. Auf Grund der Anordnung des quer zu den Zweigkanälen 8, 9 verlaufenden Mikrokanals 5 ist die Zusammenflussebene in der Substratschicht 2 um 90° gedreht gegenüber der Trennebene in der Substratschicht 1.

Die Zuordnung der Mikrokanäle 3, 4 der Substratschicht 2 zu einem Mikrokanal der Substratschicht 1 erfolgt dabei so, dass die Enden der Mikrokanäle 3, 4 unmittelbar mit dem Mikrokanal 6 in Berührung kommen. Weiterhin sind die Enden der Zweigkanäle 8, 9 so angeordnet, dass eine Überdeckung mit dem als Verbindungskanal ausgeführten Mikrokanal 5 der zweiten Substratschicht 2 möglich ist.

In der Unterseite der Substratschicht 1 befindet sich ein Einlasskanal 10, der die Enden der Mikrokanäle 3 und 4 in der Substratschicht 2 überdeckt. Dieser Einlasskanal 10 weist eine Eintrittsfläche 11 für die zu vermischenden Flüssigkeiten auf. Der Ausgang des Mischelementes wird durch den Auslasskanal 12 mit der Austrittsfläche 13 gebildet.

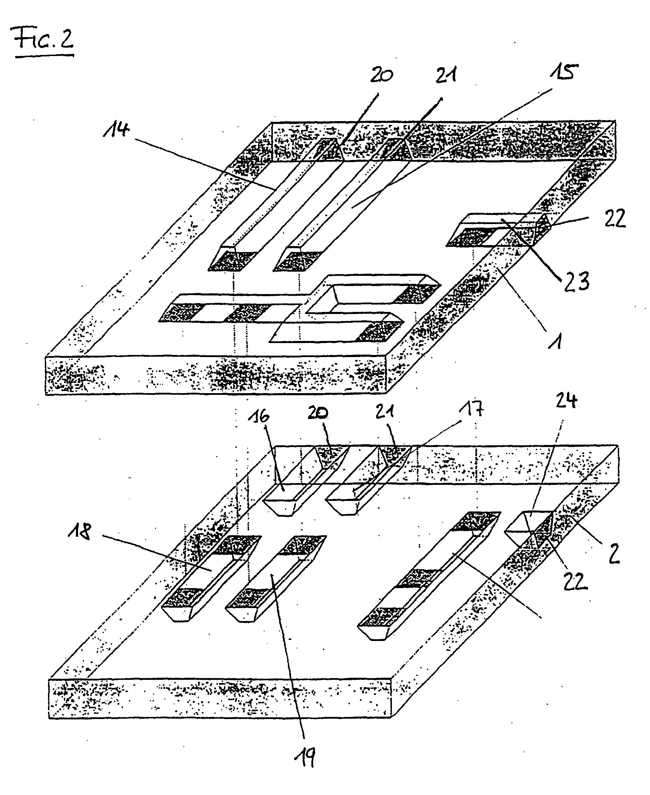

Eine zweckmäßige Anordnung von Einlasskanälen und Auslasskanälen ist in Figur 2 gezeigt. In der ersten Substratschicht 1 befinden sich die Mikrokanäle 14 und 15, welche sowohl die Mikrokanäle 16 und 17 in der zweiten Substratschicht 2 in ihrer Breite vollständig überdecken als auch mit ihren Enden die Mikrokanäle 18 und 19 der Substratschicht 2 ebenfalls überdecken. Gemeinsam mit den Mikrokanälen 14 und 15 der ersten Substratschicht 1 bilden die Mikrokanäle 16 und 17 der zweiten Substratschicht 2 Einlasskanäle 20 und 21 für die zu vermischenden Flüssigkeiten. Der Auslasskanal 22 wird durch die Überdeckung des Mikrokanals 23 in der ersten Substratschicht 1 und des Mikrokanals 24 in der zweiten Substratschicht 2 gebildet. Durch diese Überdeckung beider Mikrokanäle 23 und 24 entsteht ein gemeinsamer Auslasskanal 22.

Nicht bildlich dargestellt ist, dass zur fluidischen Kontaktierung in die Einlasskanäle 20 und 21 und den Auslasskanal 22 auch Kapillarröhrchen geschoben werden können, die an ihrem Umfang gegenüber den Substratschichten 1 und 2 abgedichtet sind.

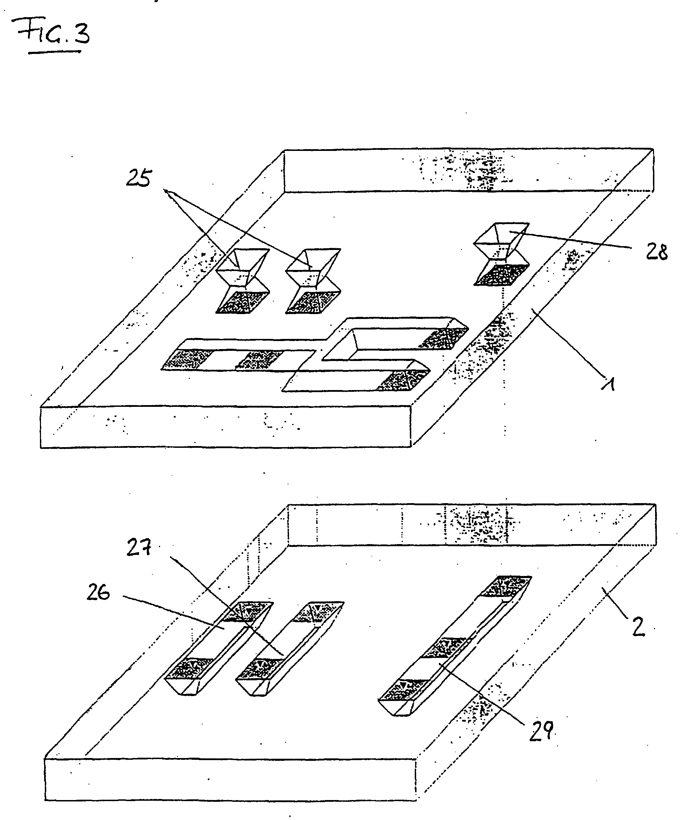

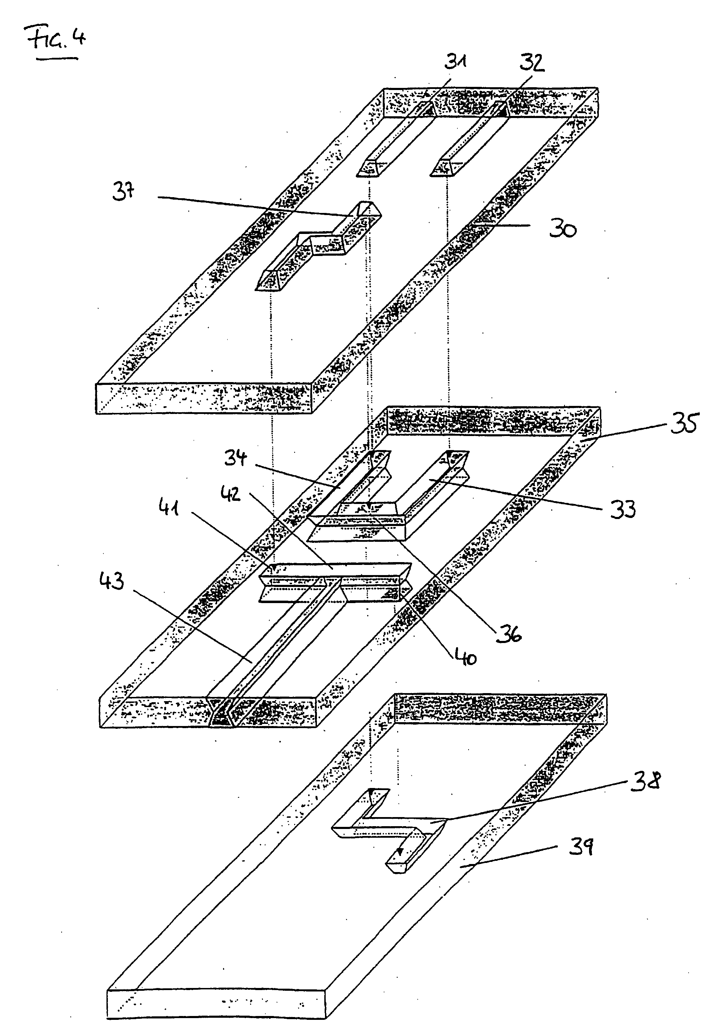

Eine weitere Möglichkeit der äußeren fluidischen Kontaktierung der Mikromischelemente ist in Figur 3 dargestellt. Die Substratschicht 1 besitzt ausgeformte Verbindungen 25, welche die Enden der Mikrokanäle 26 und 27 in der Substratschicht 2 überdecken. Diese Verbindungen 25 sind so ausgebildet, dass ein Zulauf der zu vermischenden Flüssigkeiten in das Mischelement möglich wird. Der Auslasskanal des Mischelementes wird ebenfalls von einer Verbindung 28 in der Substratschicht 1 gebildet. Diese Verbindung 28 ist dabei so angeordnet, dass er das Ende des als Verbindungskanals ausgeführten Mikrokanals 29 in der Substratschicht 2 überdeckt. Bildlich nicht dargestellt ist, dass auf der Oberfläche der Substratschicht 1 Rohre angeordnet sind, deren Eintrittsquerschnitt jeweils parallel zur Oberfläche der Substratschicht 1 angeordnet ist.

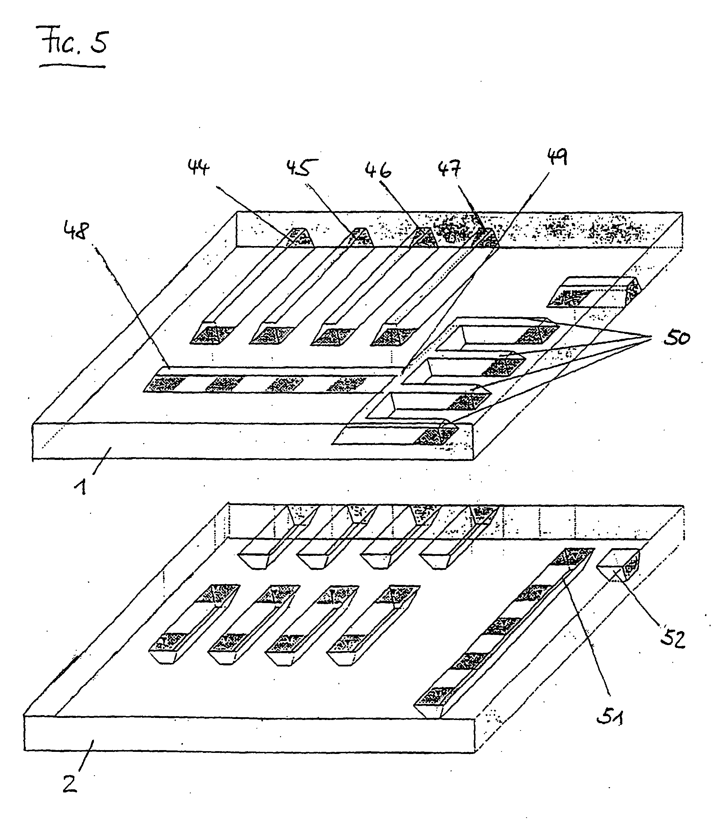

In einem weiteren Ausführungsbeispiel gemäß Figur 4 ist ein anderes Mischelement gezeigt, das aus insgesamt drei Substratschichten aufgebaut ist. In einer ersten Substratschicht 30 befinden sich Einlasskanäle 31 und 32. Die Enden dieser Einlasskanäle 31, 32 sind in Strömungsrichtung zu zwei Mikrokanalabschnitten 33 und 34 in einer zweiten Substratschicht 35 so angeordnet, dass es zu einer Überdeckung kommt. Die Mikrokanalabschnitte 33 und 34 münden in ein Zusammenflusselement 36. Das Zusammenflusselement 36 wird an seiner Oberseite von einem als Verbindungskanal ausgeführten Mikrokanal 37 der ersten Substratschicht 30 und an seiner Unterseite von einem als Verbindungskanal ausgeführten Mikrokanal 38 in einer dritten Substratschicht 39 überdeckt. Die Mikrokanäle 37 und 38 sind so geformt, dass in Strömungsrichtung gesehen deren jeweilige Endbereiche sich mit Mikrokanalabschnitten 40 und 41 in der zweiten Substratschicht 33 überdecken. Die Mikrokanalabschnitte 40 und 41 münden in einem Zusammenflusselement 42. Von diesem Zusammenflusselement 42 geht ein Auslasskanal 43 aus, mit welchem das Mischelement mit weiteren Mischelementen verbunden werden kann.

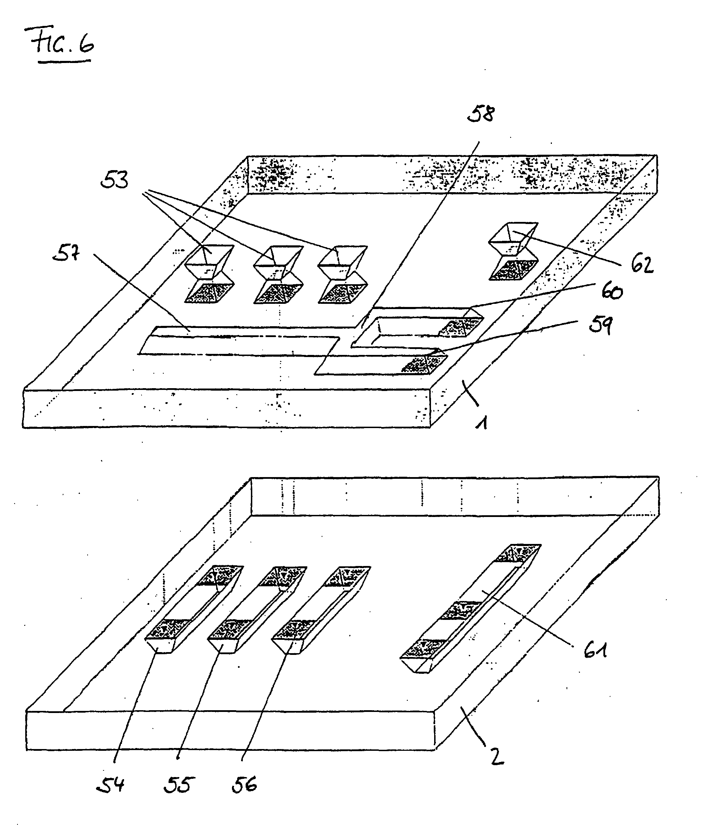

Figur 5 zeigt ein Mischelement, dass sich zum Mischen von mehr als zwei verschiedenen Flüssigkeiten eignet. Mehrere Mikrokanäle sind als voneinander getrennte Einlasskanäle 44, 45, 46 und 47 ausgebildet. Diese Einlasskanäle 44-47 münden in einen quer zu den parallel angeordneten Einlasskanäle 44-47 verlaufenden, in diesem Abschnitt als Verbindungskanal ausgeführten Mikrokanal 48, so dass im Mikrokanal 48 eine Übereinanderschichtung der einzelnen Flüssigkeitsströme erzwungen wird.

An einem Verzweigungselement 49 erfolgt eine Aufteilung des Mikrokanals 48 in die gleiche Anzahl von Zweigkanälen 50, wie Einlasskanäle 44, 45, 46 und 47 für den Flüssigkeitseintritt ausgebildet sind. Die in einer oberen Ebene verlaufenden Zweigkanäle 50 sind durch einen in einer unteren Ebene verlaufenden Mikrokanal 51 an ihren Enden miteinander verbunden, wobei durch die Anordnung der Zweigkanäle 50 und des Mikrokanals 51 die einzelnen Zusammenflussebenen der Zweigströme jeweils um 90° gedreht gegen die Trennebene im Verzweigungselement 49 ist. Der Austritt wird durch einen Auslasskanal 52 gebildet.

Figur 6 zeigt eine weitere Möglichkeit zum Mischen von mehr als zwei verschiedenen Flüssigkeiten. Die in der ersten Substratschicht 1 angeordneten Einlasskanäle 53 sind mit Mikrokanälen 54, 55 und 56 in der zweiten Substratschicht 2 des Mischelementes verbunden. Die Mikrokanäle 54, 55 und 56 münden an ihren Enden in den Mikrokanal 57 in der ersten Substratschicht 1 des Mischelementes ein. An dessen Ende befindet sich ein Verzweigungselement 58, von dem aus zwei Zweigkanäle 59 und 60 ausgehen, die in einen quer dazu verlaufenden Mikrokanal 61 in der zweiten Substratschicht 2 münden. An einem Ende des Mikrokanals 61 ist in der darüber befindlichen ersten Substratschicht 1 ein Auslasskanal 62 aus dem Mischelement angeordnet.

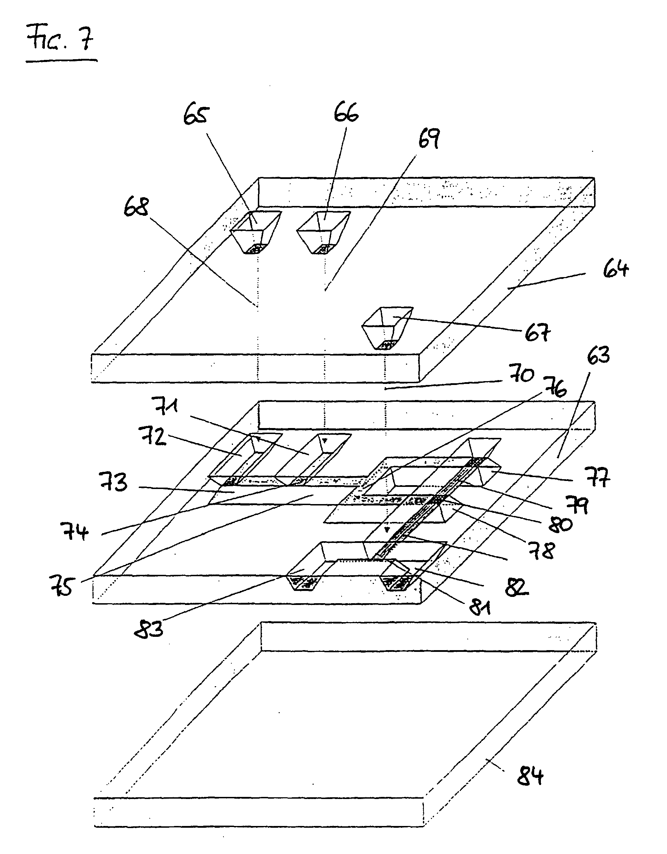

In Figur 7 ist ein Mikromischer gezeigt, bei welchem sich Mikrokanäle auf zwei Ebenen einer einzigen Substratschicht 63 befinden. Auf der Oberseite des Substrates 63 ist eine weitere Substratschicht 64 angeordnet. Die Substratschicht 64 enthält die Eingangskanäle 65 und 66 in das Mischelement sowie den Auslasskanal 67 aus dem Mischer. Im Substrat 64 kann eine beliebige Anzahl von Mischelementen angeordnet sein, wobei nur zwei Mischelemente gezeigt sind. Die Lage der Einlasskanäle 65 und 66 und des Auslasskanals 67 bezüglich der Lage der Mischelemente sind durch Pfeile 68, 69 und 70 dargestellt. Dabei sind beim ersten Mischelement des Mikromischers die Einlasskanäle 65 und 66 auf der Substratschicht 64 so positioniert, dass sie direkt mit den Mikrokanälen 71 und 72 der Substratschicht 63 verbunden sind. Die Substratschichten 63 und 64 sind miteinander hermetisch dicht verbunden. Die Mikrokanäle 71 und 72 sind in der Substratschicht 63 nebeneinander angeordnet. Die durch die Mikrokanäle 71 und 72 an der Oberseite der Substratschicht 63 zugeführten Flüssigkeiten werden im Mikrokanal 73 an der Unterseite der Substratschicht 63 übereinandergeführt. Die aus den beiden Mikrokanäle 71 und 73 kommenden Flüssigkeitsströme treffen an der Verbindung 74 wieder zusammen, wobei der Flüssigkeitsstrom aus Mikrokanal 71 in einer anderen horizontalen Ebene liegt als der Flüssigkeitsstrom aus Mikrokanal 73. Von der Verbindung 74 ausgehend setzt sich der Flüssigkeitsstrom aus Mikrokanal 75 in der zweiten Ebene der Substratschicht 63 an deren Unterseite fort bis zum Verzweigungselement 76. Von dem Verzweigungselement 76 gehen erneut zwei Zweigkanäle 77 und 78 aus, wobei der im Zweigkanal 78 geführte Flüssigkeitsstrom in der unteren Ebene des Substrates 63 verbleibt, während der zweite im Zweigkanal 77 geführte Flüssigkeitsstrom diese Ebene verlässt und in einen Mikrokanal 79 in der oberen Ebene der Substratschicht 63 mündet. Die beiden Flüssigkeitsströme aus dem Zweigkanal 77 und dem Mikrokanal 79, die sich in unterschiedlichen Ebenen der Substratschicht 63 befinden, treffen an der Verbindung 80 wieder zusammen, wobei an dieser Verbindung 80 der aus dem Zweigkanal 77 kommende Flüssigkeitsstrom in einer anderen Ebene liegt als der aus dem Mikrokanal 79 kommende Flüssigkeitsstrom. Von der Verbindung 80 ausgehend setzt sich der Mikrokanal 79 in der oberen Ebene der Substratschicht 63 fort bis zum Verzweigungselement 81. An diesem Verzweigungselement 81 werden erneut zwei Flüssigkeitsströme in die Zweigkanäle 82, 83 getrennt. Die als Auslasskanäle vorgesehenen Mikrokanäle 82 und 83 stellen die Einlasskanäle für ein anschließend angeordnetes Mischelement dar. Im Fall des letzten Mischelementes ist in der Substratschicht 64 ein Auslasskanal so angeordnet, dass er unmittelbar mit dem Mikrokanal 79 in der Substratschicht 63 in Verbindung steht. Die gesamte Substratschicht 63, auf der sich die wesentlichen Strukturen der Mischelemente befinden, ist an der Unterseite mit einer weiteren Substratschicht 84 hermetisch dicht verschlossen.

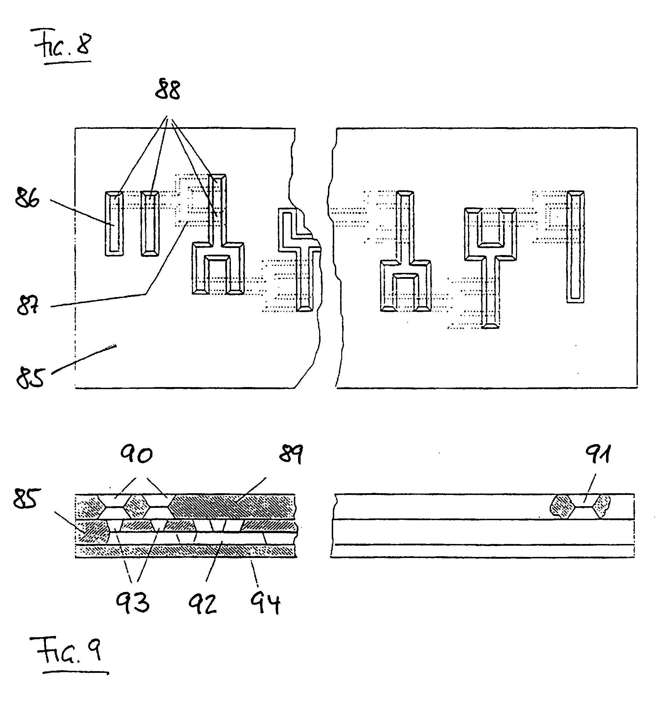

In den Figuren 8 und 9 ist die Draufsicht auf mehrere im Wesentlichen auf einer gemeinsamen Substratschicht 85 hintereinander angeordnete Mischelemente gezeigt. Das obere Substrat wurde der Anschaulichkeit halber in Fig. 8 nicht dargestellt. Die ausgezogenen Linien 86 zeigen die Struktur der Mikrokanäle in der oberen Ebene an der Oberseite der Substratschicht 85. Die Struktur der unteren Ebene an der Unterseite der Substratschicht 85 ist durch gestrichelte Linien 87 wiedergegeben. An den Überdeckungsstellen 88 der Strukturen beider Ebenen befinden sich Verbindungen zwischen den Ebenen.

Figur 9 zeigt eine Schnittdarstellung von Figur 8, wobei eine als Abdeckung wirkende Substratschicht 89 mit Einlasskanälen 90 und einem Auslasskanal 91 dargestellt sind. Mikrokanäle 92 und Verbindungen 93 in der Substratschicht 85 sind deutlich erkennbar. Die Unterseite der strukturierten Substratschicht 85 ist mit einer weiteren Substratschicht 94 abgedeckt.

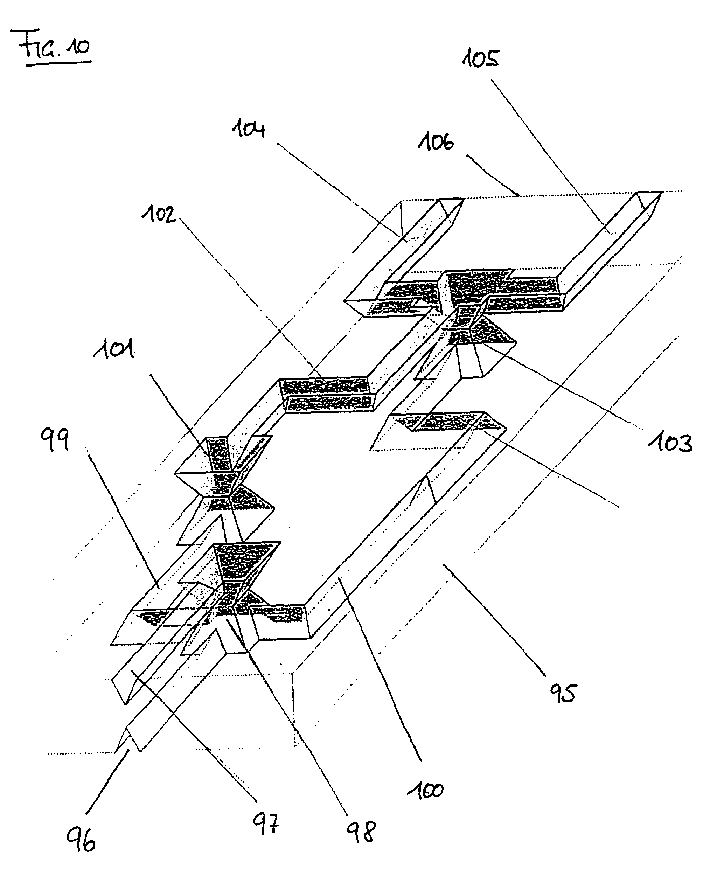

In der Figur 10 ist ein Mischelement gezeigt, bei dem sich alle Strukturen auf einer Substratschicht 95 befinden. In der oberen Ebene der Substratschicht 95 ist ein Einlasskanal 96 für eine Flüssigkeit angeordnet. In der unteren Ebene der Substratschicht 95 befindet sich ein Eingangskanal 97 für eine zweite Flüssigkeit. Beide Mikrokanäle 96, 97 münden in einem Zusammenflusselement 98, das gleichzeitig als Verzweigungselement ausgeführt ist, so dass in der unteren Ebene der Substratschicht 95 zwei neue Zweigkanäle 99 und 100 verzweigen. Das Zusammenflusselement 98 ist dabei so gestaltet, dass es die obere und die untere Ebene der Substratschicht 95 miteinander verbindet. Einer der Zweigkanäle 100 verbleibt in seinem weiteren Verlauf in der unteren Ebene der Substratschicht 95. Der zweite Zweigkanal 99 mündet in eine Verbindung 101 zwischen der oberen und der unteren Ebene des Substrates 95. Von dieser Verbindung 101 aus führt ein Mikrokanal 102 in der oberen Ebene des Substrates 95 weiter, der schließlich in einem Zusammenflusselement 103 mündet, welches ähnlich dem Zusammenflusselement 98 gestaltet ist. Von diesem Zusammenflusselement 103 aus verzweigen erneut zwei Zweigkanäle 104 und 105 in der oberen Ebene der Substratschicht. Die gestrichelte Linie 106 kennzeichnet dabei das Ende eines Mischelementes und den Übergang zu einem weiteren Mischelement. Zum Betreiben der Mischelemente können die Einlasskanäle 96 und 97 genutzt werden. In diesem Fall werden die Ausgänge durch die Zweigkanäle 104 und 105 gebildet. Ebenso ist es möglich, die Zweigkanäle 104 und 105 als Einlasskanäle des Mischelementes auszubilden. In diesem Fall wird der Ausgang des Mischelementes durch die dann als Auslasskanäle wirkenden Einlasskanäle 96 und 97 gebildet.

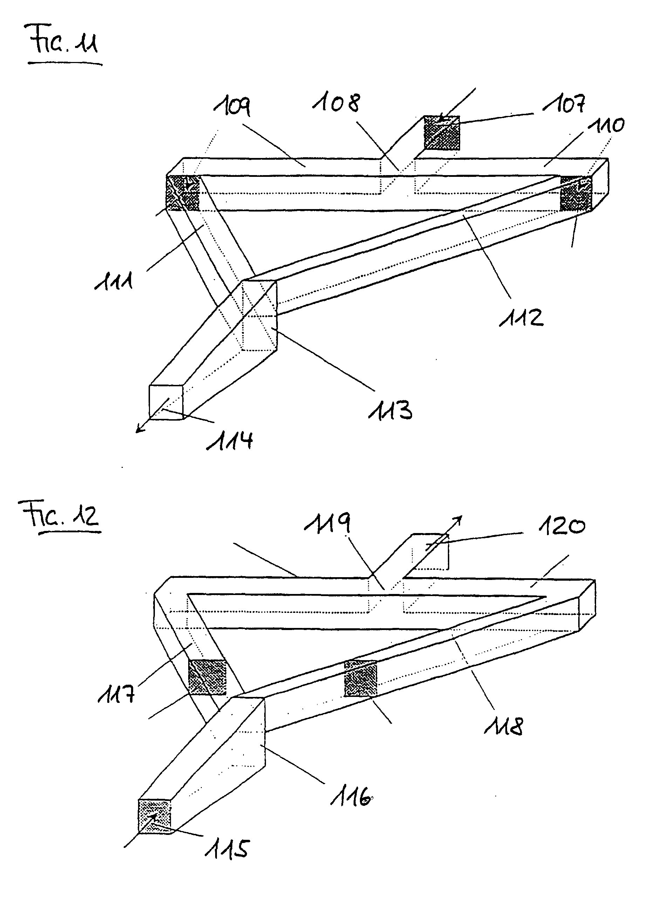

In einem in der Figur 11 dargestellten Mischelement wird die zu homogenisierende Flüssigkeit durch einen Einlasskanal 107 in das Mischelement eingeleitet. Dieser Einlasskanal 107 führt zu einem Verzweigungselement 108, von dem die Zweigkanäle 109 und 110 ausgehen. Das Verzweigungselement 108 bewirkt eine Aufteilung der hindurchströmenden Flüssigkeit entlang einer vertikalen Trennebene. Der Einlasskanal 107, das Verzweigungselement 108 und die Zweigkanäle 109, 110 befinden sich in einer horizontalen Ebene. Die weiterführenden Mikrokanäle 111, 112 sind so angeordnet, dass der Mikrokanal 111 diese Ebene verlässt, der Mikrokanal 112 in dieser horizontalen Ebene verbleibt. Die Mikrokanäle 111 und 112 führen zu einem Zusammenflusselement 113, wobei dort die beiden Mikrokanäle 111 und 112 in unterschiedlichen Ebenen zusammentreffen. Dadurch erfolgt am Zusammenflusselement 113 entlang einer horizontalen Zusammenflussebene die Übereinanderschichtung der aus den Mikrokanälen 111 und 112 strömenden Flüssigkeiten. Nachdem die Flüssigkeiten das Zusammenflusselement 113 passiert haben, gelangen sie in einen weiteren Mikrokanal 114. Dieser Mikrokanal 114 bildet in seinem weiteren Verlauf einen erneuten Einlasskanal für ein folgendes Mischelement oder führt im Fall des letzten Mischelements zum Ausgang des Mikromischers. Die Mischelemente können mehrfach hintereinander angeordnet werden. Für Mischelemente, die am Anfang angeordnet sind, kann der Zulauf der zu vermischenden Flüssigkeiten direkt in die Zweigkanäle 109 und 110 erfolgen.

In Figur 12 ist das in Fig. 11 gezeigte Mischelemente dargestellt, wobei die Durchströmungsrichtung der zu vermischenden Flüssigkeit umgekehrt verläuft. Ein Einlasskanal 115 mündet in ein Verzweigungselement 116, von dem die Zweigkanäle 117 und 118 ausgehen. In dem Verzweigungselement 116 erfolgt eine Aufteilung der Flüssigkeit entlang einer horizontalen Trennebene. Die Zweigkanäle 117 und 118 beginnen an dem Verzweigungselement 116 in zwei verschiedenen horizontalen Ebenen. Das Verzweigungselement 2 verbindet durch eine Verbindung die beiden horizontalen Ebenen. Im weiteren Verlauf der Zweigkanäle 117, 118 verlässt der Zweigkanal 117 seine ursprüngliche horizontale Ebene, während der Zweigkanal 118 in seiner ursprünglichen horizontalen Ebene verbleibt. Die Zweigkanäle 117 und 118 verlaufen so, dass sie in einem Zusammenflusselement 119 wieder zusammentreffen. Da dann aber beide Zweigkanäle 117 und 118 wieder in gleichen horizontalen Ebenen verlaufen, erfolgt am Zusammenflusselement 119 die Aneinanderschichtung der aus den Mikrokanälen 117 und 118 strömenden Flüssigkeiten entlang einer vertikalen Zusammenflussebene. Nach dem Zusammenflusselement 119 ist ein weiterer Mikrokanal 120 angeordnet. Dieser Mikrokanal 120 bildet in seinem weiteren Verlauf einen erneuten Einlasskanal für ein folgendes Mischelement oder führt im Fall des letzten Mischelementes zum Ausgang des Mikromischers.

### Bezugszeichenliste:

- 1,2: - Substratschichten
- 3,4,5: - Mikrokanäle
- 6: - gerade verlaufender Abschnitt
- 7: - Verzweigungselement
- 8, 9: - Zweigkanäle
- 10: - Einlasskanal
- 11: - Eintrittsfläche
- 12: - Auslasskanal
- 13: - Austrittsfläche
- 14-19: - Mikrokanäle
- 20, 21: - Einlasskanäle
- 22: - Auslasskanal
- 23, 24: - Mikrokanäle
- 25: - Verbindungen
- 26, 27: - Mikrokanäle
- 28: - Verbindung
- 29: - Mikrokanal
- 30: - Substratschicht
- 31, 32: - Einlasskanäle
- 33, 34: - Mikrokanäle
- 35: - Substratschicht
- 36: - Zusammenflusselement
- 37, 38: - Mikrokanäle
- 39: - Substratschicht
- 40, 41: - Mikrokanalabschnitte
- 42: - Zusammenflusselement
- 43: - Auslasskanal
- 44-47: - Einlasskanäle
- 48: - Mikrokanal
- 49: - Verzweigungselement
- 50: - Zweigkanäle
- 51: - Mikrokanal
- 52: - Auslasskanal
- 53: - Einlasskanäle
- 54-57: - Mikrokanäle
- 58: - Verzweigungselement
- 59, 60: - Zweigkanäle
- 61: - Mikrokanal
- 62: - Auslasskanal
- 63, 64: - Substratschicht
- 65, 66: - Einlasskanäle
- 67: - Auslasskanal
- 68-70: - Pfeile
- 71-73: - Mikrokanäle
- 74: - Verbindung
- 75: - Mikrokanal
- 76: - Verzweigungselement
- 77, 78: - Zweigkanäle
- 79: - Mikrokanal
- 80: - Verbindung
- 81: - Verzweigungselement
- 82, 83: - Zweigkanäle
- 84: - Substratschicht
- 85: - Substratschicht
- 86: - Einlasskanal
- 87: - durchgezogene Linien
- 88: - gestrichelte Linien
- 89: - Substratschicht
- 90: - Einlasskanäle
- 91: - Auslasskanal
- 92: - Mikrokanäle
- 93: - Verbindungen
- 94: - Substratschicht
- 95: - Substratschicht
- 96, 97: - Einlasskanäle
- 98: - Zusammenflusselement
- 99, 100: - Zweigkanäle
- 101: - Verbindung
- 102: - Mikrokanal
- 103: - Zusammenflusselement
- 104, 105: - Zweigkanäle
- 106: - gestrichelte Linie
- 107: - Einlasskanal
- 108: - Verzweigungselement
- 109, 110: - Zweigkanäle
- 111, 112: - Mikrokanäle
- 113: - Zusammenflusselement
- 114: - Mikrokanal
- 115: - Einlasskanal
- 116: - Verzweigungselement
- 117, 118: - Zweigkanäle
- 119: - Zusammenflusselement
- 120: - Mikrokanal

## Patentansprüche

1. Verfahren zum Mischen von Flüssigkeitsteilströmen, die in Mikrokanälen (3-5,14-19,23,24,29,33,34,37,38,44-48,51,54-57,61,71-73,75,77-79,82,83,102,111,112,114,120) fließen, wobei in mehreren aufeinanderfolgenden Mischschritten jeweils ein Flüssigkeitsstrom längs mindestens einer sich in Strömungsrichtung erstreckenden Trennebene in mindestens zwei Teilströme aufgeteilt wird und die Teilströme längs mindestens einer sich in Strömungsrichtung erstreckenden Zusammenflussebene zu einem dem nächsten Mischschritt zugeführten Flüssigkeitsstrom zusammengefügt werden, **dadurch gekennzeichnet, dass** in den aufeinanderfolgenden Mischschritten jeweils die Zusammenflussebene gegenüber der vorangehenden Trennebene um 90° gedreht ist, dass die Flüssigkeitsströme innerhalb eines Mischschritts in Mikrokanälen (3-5,14-19,23,24,29,33,34,37,38,44-48,51,54-57,61,71-73,75,77-79,82,83,102,111,112,114,120) geführt werden, die sich auf mindestens zwei Ebenen befinden und dass die aufgeteilten Teilströme beim Zusammenfügen durch Verbindungen (25,28,53,74,80,93,101) geführt werden, die mindestens zwei Ebenen verbinden.

2. Vorrichtung zum Mischen von Flüssigkeitsmengen mit Mikrokanälen (3-5,14-19,23,24,26,27,29,33,34,37,38,48,51, 54-57,61,71-73,75,79,92,102,111,112,114,120), bestehend aus mindestens einem Mischelement mit mindestens einem Einlasskanal (10,20,21,31,32,44-47,53,65,66,86,90,96,97, 107,115) und mit mindestens einem Auslasskanal (12,22,43, 52,62,67,91) wobei sich in jedem Mischelement der Einlasskanal (10,20,21,31,32,44-47,53,65,66,86,90,96,97, 107,115) längs mindestens einer sich in Strömungsrichtung erstreckenden Trennebene in mindestens zwei Zweigkanäle (8,9,50,59,60,77,78,82,83,99,100,104,105,109,110,117,118) verzweigt, die längs mindestens einer sich in Strömungsrichtung erstreckenden Zusammenflussebene zu dem Auslasskanal (12,22,43,52,62,67,91) zusammengeführt sind, **dadurch gekennzeichnet, dass** in einem Mischelement jeweils die Zusammenflussebene gegenüber der Trennebene des selben Mischelements um 90° gedreht ist, dass innerhalb eines Mischelements mindestens auf zwei Ebenen Mikrokanäle (3-5,14-19,23,24,26,27,29,33,34,37,38,48,51,54-57,61,71-73,75,79,92,102,111,112,114,120) verlaufen, dass an den Verzweigungselementen (7,49,68,76,81,108,116) und/oder Zusammenflusselementen (36,42,98,103,113,119) mindestens zwei Ebenen verbunden werden und dass von Verbindungen (25,28,53,74,80,93,101) neue Mikrokanäle (5,37,38,48,51,57,61,75,79,92,102,114,120) ausgehen.

3. Vorrichtung nach Anspruch 2, **dadurch gekennzeichnet, dass** die Auslasskanäle (12,22,43,52,62,67,91) in einer zur Ebene der Eingangskanäle (10,20,21,31,32,44-47,53,65,66,86,90,96,97, 107,115) parallelen Ebene verlaufen und über Verbindungen (25,28,53,74,80,93,101) zwischen den Ebenen in die Ebene der Eingangskanäle (10,20,21,31,32,44-47,53,65,66,86,90,96,97, 107,115) zurückgeführt werden.

4. Vorrichtung nach Anspruch 2, **dadurch gekennzeichnet, dass** an den Zusammenflusselementen (36,42,98,103,113,119) ein Verbindungskanal zu einer nächsten Ebene angeordnet ist, der sich in dieser nächsten Ebene befindet, und dass von diesem Verbindungskanal neue Mischkanäle ausgehen.

5. Vorrichtung nach Anspruch 2, **dadurch gekennzeichnet, dass** sich zwischen die einzelnen Ebenen bildenden Substratschichten (30,39,64,84,89,94) eine dazwischen angeordnete Ebene (35,63,85) befindet, die Verbindungen zwischen den einzelnen Substratschichten (30,39,64,84,89,94) aufweist.

6. Vorrichtung nach Anspruch 2, **dadurch gekennzeichnet, dass** die von einem Zusammenflusselement (36,42,98,103,113,119) ausgehenden Zweigkanäle (8,9,50,59,60,77,78,82,83,99,100,104,105,109,110,117,118) gleichen Strömungswiderstand aufweisen.

7. Vorrichtung nach Anspruch 2, **dadurch gekennzeichnet, dass** sich die Mikrokanäle (3-5,14-19,23,24,26,27,29,33, 34,37,38,48,51,54-57,61,71-73,75,79,92,102,111,112,114,120) jeder Ebene auf getrennten Substratschichten (1,2,30,35,39, 63,64,84,85,89,94) befinden.

8. Vorrichtung nach Anspruch 2, **dadurch gekennzeichnet, dass** eine aus einer Substratschicht gebildete Ebene zur Abdeckung der Vorrichtung aus Silizium oder aus Glas besteht.

9. Vorrichtung nach Anspruch 2, **dadurch gekennzeichnet, dass** eine Anzahl von Mischelementen in einer Ebene nacheinander angeordnet sind, wobei jeweils das folgende Mischelement gegenüber dem vorhergehenden Mischelement verdreht angeordnet ist.

10. Vorrichtung nach Anspruch 9, **dadurch gekennzeichnet, dass** das folgende Mischelement um 90° verdreht angeordnet ist.

11. Vorrichtung nach Anspruch 2, **dadurch gekennzeichnet, dass** einkristallines Silizium oder Glas zur Herstellung von Substratschichten der Vorrichtung verwendet wird, wobei die Mikrokanäle (3-5,14-19,23,24,26,27,29,33,34,37, 38,48,51,54-57,61,71-73,75,79,92,102,111,112,114,120) und die Verbindungen (25,28,53,74,80,93,101) mit Hilfe mikrotechnischer Strukturierungsverfahren wie chemische Ätzprozesse, Laserstrukturierungsverfahren, Fotoformprozesse, Sandstrahlen und dergleichen herstellbar sind.

## Claims

1. Method for mixing partial streams of liquid which flow in microchannels (3-5, 14-19, 23, 24, 29, 33, 34, 37, 38, 44-48, 51, 54-57, 61, 71-73, 75, 77-79, 82, 83, 102, 111, 112, 114, 120), in which, in a plurality of successive mixing steps, in each case one liquid stream is divided into at least two partial streams along at least one separating level, which extends in the direction of flow, and the partial streams are combined along at least one confluence level, which extends in the direction of flow, to form a liquid stream which is fed to the next mixing step, **characterized in that** in the successive mixing steps, the confluence level is in each case rotated through 90° with respect to the preceding separating level, **in that** the liquid streams within a mixing step are guided in microchannels (3-5, 14-19, 23, 24, 29, 33, 34, 37, 38, 44-48, 51, 54-57, 61, 71-73, 75, 77-79, 82, 83, 102, 111, 112, 114, 120) which are located on at least two levels, and **in that** the divided partial streams, when they are brought together, are guided through connections (25, 28, 53, 74, 80, 93, 101) which connect at least two levels.

2. Device for mixing quantities of liquids, having microchannels (3-5, 14-19, 23, 24, 26, 27, 29, 33, 34, 37, 38, 48, 51, 54-57, 61, 71-73, 75, 79, 92, 102, 111, 112, 114, 120), comprising at least one mixing element having at least one inlet channel (10, 20, 21, 31, 32, 44-47, 53, 65, 66, 86, 90, 96, 97, 107, 115) and having at least one outlet channel (12, 22, 43, 52, 62, 67, 91), the inlet channel (10, 20, 21, 31, 32, 44-47, 53, 65, 66, 86, 90, 96, 97, 107, 115) in each mixing element, along at least one separating level, which extends in the direction of flow, branching into at least two branch channels (8, 9, 50, 59, 60, 77, 78, 82, 83, 99, 100, 104, 105, 109, 110, 117, 118), which are brought together along at least one confluence level, which extends in the direction of flow, to form the outlet channel (12, 22, 43, 52, 62, 67, 91), **characterized in that** in a mixing element the confluence level is in each case rotated through 90° with respect to the separating level of the same mixing element, **in that** within one mixing element microchannels (3-5, 14-19, 23, 24, 26, 27, 29, 33, 34, 37, 38, 48, 51, 54-57, 61, 71-73, 75, 79, 92, 102, 111, 112, 114, 120) run on at least two levels, **in that** at least two levels are connected at the branch elements (7, 49, 68, 76, 81, 108, 116) and/or confluence elements (36, 42, 98, 103, 113, 119), and **in that** new microchannels (5, 37, 38, 48, 51, 57, 61, 75, 79, 92, 102, 114, 120) originate from connections (25, 28, 53, 74, 80, 93, 101).

3. Device according to Claim 2, **characterized in that** the outlet channels (12, 22, 43, 52, 62, 67, 91) run in a level parallel to the level of the inlet channels (10, 20, 21, 31, 32, 44-47, 53, 65, 66, 86, 90, 96, 97, 107, 115) and are fed back into the level of the inlet channels (10, 20, 21, 31, 32, 44-47, 53, 65, 66, 86, 90, 96, 97, 107, 115) via connections (25, 28, 53, 74, 80, 93, 101) between the levels.

4. Device according to Claim 2, **characterized in that** at the confluence elements (36, 42, 98, 103, 113, 119) there is arranged a connecting channel leading to the next level, the connecting channel being located in this next level, and **in that** new mixing channels originate from this connecting channel.

5. Device according to Claim 2, **characterized in that** between substrate layers (30, 39, 64, 84, 89, 94) which form the individual levels there is arranged an intermediate level (35, 63, 85) which has connections between the individual substrate layers (30, 39, 64, 84, 89, 94).

6. Device according to Claim 2, **characterized in that** the branch channels (8, 9, 50, 59, 60, 77, 78, 82, 83, 99, 100, 104, 105, 109, 110, 117, 118) which originate from one confluence element (36, 42, 98, 103, 113, 119) have the same flow resistance.

7. Device according to Claim 2, **characterized in that** the microchannels (3-5, 14-19, 23, 24, 26, 27, 29, 33, 34, 37, 38, 48, 51, 54-57, 61, 71-73, 75, 79, 92, 102, 111, 112, 114, 120) of each level are located on separate substrate layers (1, 2, 30, 35, 39, 63, 64, 84, 85, 89, 94).

8. Device according to Claim 2, **characterized in that** a level formed from a substrate layer for covering the device consists of silicon or glass.

9. Device according to Claim 2, **characterized in that** a number of mixing elements are arranged successively in one level, the following mixing element being arranged in each case rotated relative to the preceding mixing element.

10. Device according to Claim 9, **characterized in that** the following mixing element is arranged rotated through 90°.

11. Device according to Claim 2, **characterized in that** single-crystalline silicon or glass is used to produce substrate layers of the device, it being possible for the microchannels (3-5, 14-19, 23, 24, 26, 27, 29, 33, 34, 37, 38, 48, 51, 54-57, 61, 71-73, 75, 79, 92, 102, 111, 112, 114, 120) and the connections (25, 28, 53, 74, 80, 93, 101) to be produced with the aid of micro-structuring methods, such as chemical etching processes, laser structuring processes, photographic forming processes, sandblasting and the like.

## Revendications

1. Procédé pour mélanger des flots partiels de liquide qui s'écoulent dans des micro-canaux (3-5, 14-19, 23, 24, 29, 33, 34, 37, 38, 44-48, 51, 54-57, 61, 71-73, 75, 77-79, 82, 83, 102, 111, 112, 114, 120), moyennant quoi en plusieurs étapes de mélange qui se suivent un flot de liquide se divise en au moins deux flots partiels tout en s'écoulant le long d'au moins un niveau de séparation positionné dans le sens de l'écoulement, et les flots partiels tout en s'écoulant le long d'au moins un niveau de convergence positionné dans le sens de l'écoulement rejoignent un flot de liquide qui est ajouté lors d'une des étapes de mélange suivantes, **caractérisé en ce que**, lors des étapes de mélange qui se suivent, le niveau de convergence est à chaque fois tourné à 90° par rapport au niveau de séparation précédent, que les flots de liquide lors d'une étape de mélange sont acheminés par des micro-canaux (3-5, 14-19, 23, 24, 29, 33, 34, 37, 38, 44-48, 51, 54-57, 61, 71-73, 75, 77-79, 82, 83, 102, 111, 112, 114, 120), qui se trouvent sur au moins deux niveaux et que les flots partiels divisés sont acheminés par des raccordements (25, 28, 53, 74, 80, 93, 101) qui relient au moins deux niveaux, en se rejoignant.

2. Dispositif pour mélanger des quantités de liquide doté de micro-canaux (3-5, 14-19, 23, 24, 26, 27, 29, 33, 34, 37, 38, 48, 51, 54-57, 61, 71-73, 75, 79, 92, 102, 111, 112, 114, 120), composé d'au moins un mélangeur avec au moins un canal d'admission (10, 20, 21, 31, 32, 44-47, 53, 65, 66, 86, 90, 96, 97, 107, 115) et au moins un canal d'évacuation (12, 22, 43, 52, 62, 67, 91), moyennant quoi dans chaque mélangeur le canal d'admission (10, 20, 21, 31, 32, 44-47, 53, 65, 66, 86, 90, 96, 97, 107, 115) situé le long d'au moins un niveau de séparation positionné dans le sens de l'écoulement se divise en au moins deux branches (8, 9, 50, 59, 60, 77, 78, 82, 83, 99, 100, 104, 105, 109, 110, 117, 118), qui se rejoignent au canal d'évacuation (12, 22, 43, 52, 62, 67, 91) situé le long d'au moins un niveau de convergence positionné dans le sens de l'écoulement, **caractérisé en ce que** dans un mélangeur chaque niveau de convergence est tourné à 90° par rapport au niveau de séparation du même mélangeur, que, dans un mélangeur, des micro-canaux (3-5, 14-19, 23, 24, 26, 27, 29, 33, 34, 37, 38, 48, 51, 54-57, 61, 71-73, 75, 79, 92, 102, 111, 112, 114, 120) sont situés sur au moins deux niveaux, qu'au moins deux niveaux sont reliés aux éléments de branche (7, 49, 68, 76, 81, 108, 116) et/ou aux éléments de convergence (36, 42, 98, 103, 113, 119) et qu'à partir des raccordements (25, 28, 53, 74, 80, 93, 101) partent de nouveaux micro-canaux (5, 37, 38, 48, 51, 57, 61, 75, 79, 92, 102, 114, 120).

3. Dispositif selon la revendication 2, **caractérisé en ce que** les canaux d'évacuation (12, 22, 43, 52, 62, 67, 91) sont situés à un niveau parallèle au niveau des canaux d'admission (10, 20, 21, 31, 32, 44-47, 53, 65, 66, 86, 90, 96, 97, 107, 115) et sont renvoyés vers le niveau des canaux d'admission (10, 20, 21, 31, 32, 44-47, 53, 65, 66, 86, 90, 96, 97, 107, 115) par des raccordements (25, 28, 53, 74, 80, 93, 101) entre les niveaux.

4. Dispositif selon la revendication 2, **caractérisé en ce qu'**un canal de raccordement à un niveau suivant, qui se trouve dans le niveau suivant, est disposé sur les éléments de convergence (36, 42, 98, 103, 113, 119) et que de nouveaux canaux de mélange partent de ce canal de raccordement.

5. Dispositif selon la revendication 2, **caractérisé en ce qu'**entre les couches de substrat (30, 39, 64, 84, 89, 94) formant les différents niveaux, il existe un niveau intermédiaire (35, 63, 85) qui présente des raccordements entre les différentes couches de substrat (30, 39, 64, 84, 89, 94).

6. Dispositif selon la revendication 2, **caractérisé en ce que** les branches (8, 9, 50, 59, 60, 77, 78, 82, 83, 99, 100, 104, 105, 109, 110, 117, 118) partant d'un élément de convergence (36, 42, 98, 103, 113, 119) présentent la même résistance au courant.

7. Dispositif selon la revendication 2, **caractérisé en ce que** les micro-canaux (3-5, 14-19, 23, 24, 26, 27, 29, 33, 34, 37, 38, 48, 51, 57, 61, 71-73, 75, 79, 92, 102, 111, 112, 114, 120) de chaque niveau se trouvent sur des couches de substrat séparées (1, 2, 30, 35, 39, 63, 64, 84, 85, 89, 94).

8. Dispositif selon la revendication 2, **caractérisé en ce qu'**un niveau formé par une couche de substrat pour le recouvrement du dispositif se compose de silicium ou de verre.

9. Dispositif selon la revendication 2, **caractérisé en ce qu'**un nombre de mélangeurs placés l'un après l'autre est disposé sur un niveau, moyennant quoi chaque mélangeur suivant est disposé dans le sens inverse par rapport au mélangeur précédent.

10. Dispositif selon la revendication 9, **caractérisé en ce que** le mélangeur suivant est disposé à un angle de 90°.

11. Dispositif selon la revendication 2, **caractérisé en ce que** du silicium monocristallin ou du verre est utilisé pour la fabrication des couches de substrat du dispositif, moyennant quoi les micro-canaux (3-5, 14-19, 23, 24, 26, 27, 29, 33, 34, 37, 38, 48, 51, 54-57, 61, 71-73, 75, 79, 92, 102, 111, 112, 114, 120) et les raccordements (25, 28, 53, 74, 80, 93, 101) peuvent être fabriqués à l'aide des procédés de microstructuration tels que des procédés d'attaque chimique, procédés de structuration au laser, procédés Fotoform, sablages et similaires.
